(19) Europäisches Patentamt
European Patent Office
Office européen des brevets

(11) **EP 2 217 477 B1**

## (12) EUROPÄISCHE PATENTSCHRIFT

(45) Veröffentlichungstag und Bekanntmachung des Hinweises auf die Patenterteilung:
**10.12.2014 Patentblatt 2014/50**

(21) Anmeldenummer: **08804989.5**

(22) Anmeldetag: **02.10.2008**

(51) Int Cl.:
**B60T 8/172** *(2006.01)*     **B60T 8/173** *(2006.01)*
**G01G 19/08** *(2006.01)*

(86) Internationale Anmeldenummer:
**PCT/EP2008/063203**

(87) Internationale Veröffentlichungsnummer:
**WO 2009/059853 (14.05.2009 Gazette 2009/20)**

(54) **VERFAHREN ZUM DETEKTIEREN VON RADSCHLUPF**

METHOD FOR DETECTING WHEEL SLIP

PROCÉDÉ DE DÉTECTION DE GLISSEMENT DE ROUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.11.2007 DE 102007052749**

(43) Veröffentlichungstag der Anmeldung:
**18.08.2010 Patentblatt 2010/33**

(73) Patentinhaber: **Robert Bosch GmbH**
**70442 Stuttgart (DE)**

(72) Erfinder:
• **KUEPERKOCH, Stefan**
**71720 Oberstenfeld (DE)**
• **LEIBELING, Frank**
**71696 Moeglingen (DE)**
• **JENINGA, Jasper-Jeen**
**74199 Untergruppenbach (DE)**

(56) Entgegenhaltungen:
**EP-A- 0 443 785     EP-A- 0 932 033**
**WO-A-2004/074057     DE-A1- 19 728 769**
**US-B1- 6 615 126**

EP 2 217 477 B1

**Beschreibung**

Stand der Technik

Die Erfindung betrifft ein Verfahren zum Detektieren von Radschlupf gemäß dem Oberbegriff des Patentanspruchs 1 sowie ein entsprechendes Steuergerät zum Ausführen des Verfahrens gemäß dem Patentanspruch 9. Ein gattungsgemäßes Verfahren ist aus der US 6 615 126 B1 bekannt.

Die Fahrzeuggeschwindigkeit von Kfz wird heute üblicherweise aus den Rad-Drehzahlen geschätzt. Bei dieser Methode kann es zu Ungenauigkeiten kommen, wenn beim Beschleunigen oder Abbremsen des Fahrzeugs ein hoher Radschlupf auftritt, also wenn sich bestimmte Räder schneller oder langsamer drehen als die tatsächliche Fahrzeuggeschwindigkeit. In diesem Fall wird die Fahrzeuggeschwindigkeit entweder zu hoch oder zu niedrig geschätzt.

Steuereinheiten wie ABS, TCS und ESP nutzen die geschätzte Geschwindigkeit zur Überwachung des Fahrzustandes oder zur Berechnung von Sollwerten, wie z. B. zur Berechnung einer Soll-Gierrate. Eine ungenaue Bestimmung der Fahrzeuggeschwindigkeit kann daher dazu führen, dass die Steuereinheiten falsch reagieren und das Fahrzeug zu schwach oder zu stark bremsen.

Offenbarung der Erfindung

Die Aufgabe der vorliegenden Erfindung besteht somit darin, eine verbesserte Möglichkeit zur Erkennung von Radschlupf bzw. der Stabilität eines Rades bereitzustellen.

Gelöst wird diese Aufgabe gemäß der Erfindung durch die im Patentanspruch 1 angegebenen Merkmale. Weitere Ausgestaltungen der Erfindung ergeben sich aus den Unteransprüchen.

Ein wesentlicher Aspekt der Erfindung besteht darin, das Antriebsmoment an wenigstens einem Rad zu variieren und die Reaktion des Rades auf die Änderung des Antriebsmoments zu messen und auszuwerten. Bei Vorliegen von hohem Radschlupf wird sich die Radgeschwindigkeit relativ schnell ändern, da im Wesentlichen nur das betreffende Rad durch das Antriebsmoment beschleunigt bzw. verzögert wird. Die Geschwindigkeit des Fahrzeugs ändert sich dabei nicht oder nur kaum. Liegt dagegen kein bzw. nur geringer Radschlupf vor, ist die Radbeschleunigung wesentlich geringer, da nicht nur das betreffende Rad, sondern das gesamte Fahrzeug beschleunigt bzw. verzögert wird. Aus der Reaktion des Rades kann somit geschlossen werden, ob das Rad stabil oder instabil läuft.

Zur Bestimmung der Reaktion des Rades kann z. B die Raddrehzahl, deren Änderung, die Radgeschwindigkeit, deren Änderung, die Radbeschleunigung bzw. deren Änderung oder eine andere für das Radverhalten kennzeichnende Größe ausgewertet werden. Alternativ könnte auch die Änderung des Rad-Drehmoments ausgewertet werden. Im Folgenden wird aus Gründen der Einfachheit nur auf die Änderung der Radgeschwindigkeit Bezug genommen. Die anderen Größen können jedoch gleichermaßen zur Auswertung herangezogen werden.

Das erfindungsgemäße Verfahren findet vorzugsweise Anwendung bei 4X4-Fahrzeugen.

Eine Radinstabilität wird erkannt, wenn die Änderung der Radgeschwindigkeit (oder einer anderen charakteristischen Größe) in Reaktion auf die Änderung des Antriebsmoments einen vorgegebenen Schwellenwert überschreitet. Der Schwellenwert liegt vorzugsweise etwa 10% Abweichung gegenüber dem Wert, der ohne künstliche Änderung des Antriebsmoments, bei einem nicht schlupfenden (stabilen) Rad vorliegen würde. Die entsprechenden Werte bei stabilem Fahrverhalten können z.B. als Kennlinien in einem Speicher hinterlegt sein.

Die Änderung der Radgeschwindigkeit oder die Radbeschleunigung wird vorzugsweise mittels Rad-Drehzahlsensoren gemessen.

Gemäß einer besonderen Ausführungsform der Erfindung kann das Antriebsmoment auch ein oder mehrere Male aufeinander folgend erhöht und wieder verringert werden. Im Extremfall kann das Antriebsmoment z. B. periodisch oszillierend variiert werden. Je nachdem, ob sich das Rad im Schlupf befindet oder nicht, wird es der Anregung entweder in kurzem zeitlichen Abstand und mit hoher Amplitude, oder stark verzögert, mit geringer Amplitude folgen. Aus der Reaktion des Rades kann somit wiederum die Stabilität des Rades ermittelt werden.

Bei oszillierender Anregung wird vorzugsweise auf das Vorliegen einer Radinstabilität erkannt, wenn die Änderung der Radgeschwindigkeit oder die Frequenz wenigstens ein mal einen vorgegebenen Schwellenwert übersteigt. Es kann auch festgelegt werden, dass die betrachtete Größe mehrere Male zugehörige Schwellenwerte übersteigen muss. Bei einer Erhöhung des Antriebsmoments kann beispielsweise festgelegt werden, dass in der Beschleunigungsphase ein bestimmter Beschleunigungswert, und bei der Verringerung des Antriebsmoments ein bestimmter Verzögerungswert überschritten werden muss.

Das Antriebsmoment wird vorzugsweise mittels eines Motor-Steuergeräts variiert, das ein Motorsteuersignal an den Motor des Fahrzeugs ausgibt.

Der Radschlupf kann in bestimmtem Umfang auch quantitativ bestimmt werden, indem ein Verhältnis aus der Anregung (Änderung des Antriebsmoments) und der Reaktion des Rades gebildet wird.

Das vorstehend beschriebene Verfahren ist vorzugsweise Software gesteuert. Ein entsprechender Algorithmus kann z. B. im Motor-Steuergerät hinterlegt sein. Beispielsweise kann für den Fall, dass kein Radschlupf vorliegt bzw. das Rad stabil läuft, die Fahrzeugmasse aus der Änderung des Antriebsmoments bzw. der am Rad wirkenden Kraft $\Delta F$ und der Änderung der Fahr-

zeugbeschleunigung $\Delta a$ berechnet werden. Das am Rad wirkende Drehmoment sollte dabei eine gewisse Zeit konstant gehalten werden, um eine stabile Beschleunigung zu erreichen. Für die Fahrzeugmasse $m_F$ gilt:

$$m_F = \frac{\Delta F}{\Delta a}$$

Dieser Ansatz kann auch unabhängig von der Radschlupferkennung verwendet werden.

Kurze Beschreibung der Zeichnungen

Die Erfindung wird nachstehend anhand der beigefügten Zeichnungen beispielhaft näher erläutert. Es zeigen:

Fig. 1   eine Skizze eines Fahrzeugs, bei dem Räder über ein Getriebe von einem Motor angetrieben werden; und

Fig. 2   ein Ablaufdiagramm eines Ausführungsbeispiels des erfindungsgemäßen Verfahrens.

Ausführungsformen der Erfindung

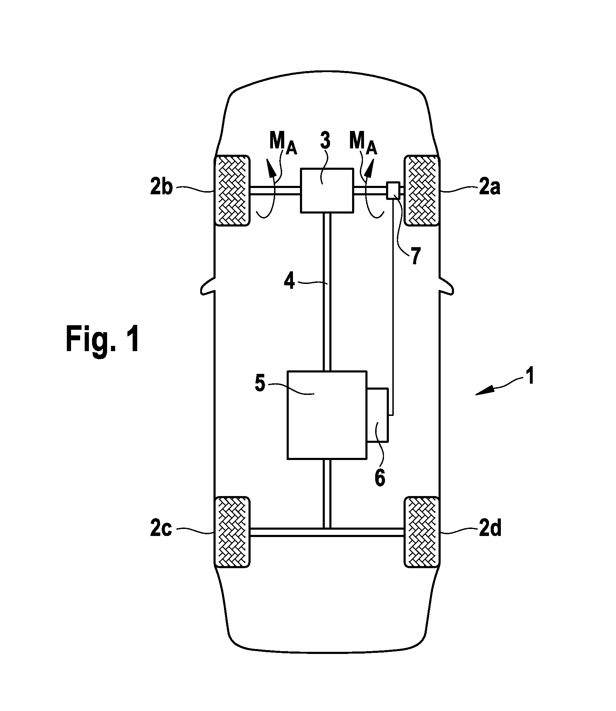

Figur 1 zeigt eine schematische Darstellung eines Fahrzeugs 1 mit vier Rädern 2a, 2b, 2c und 2d. Die Vorderräder 2a und 2b werden von einem Motor 5 über den Antriebsstrang 4 und ein Getriebe 3 angetrieben. Das auf die Räder 2a und 2b wirkende Antriebsmoment ist mit $M_A$ bezeichnet. Der Motor 5 ist mit einem Motor-Steuergerät 6 verbunden.

Am Rad 2a ist ein Drehzahlsensor 7 angeordnet, aus dessen Signal z. B. die Radgeschwindigkeit oder Radbeschleunigung ermittelt werden kann.

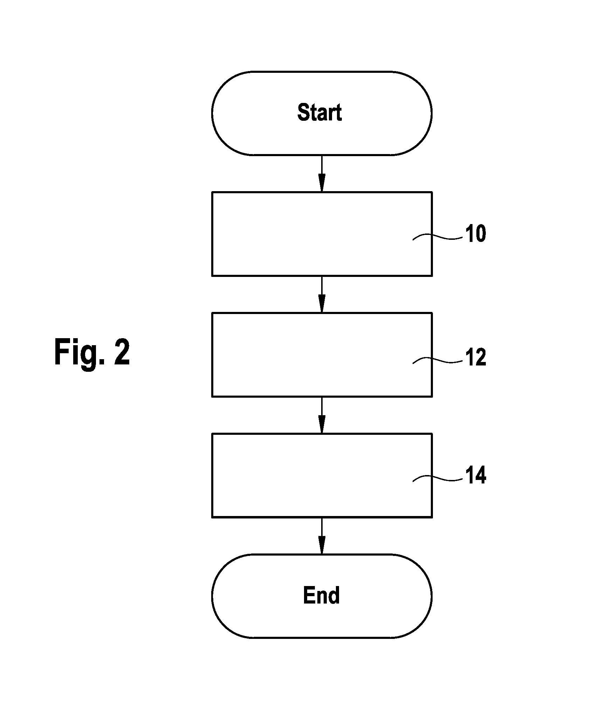

Um einen hohen Radschlupf bzw. eine Radinstabilität zu erkennen (d. h. der Radschlupf ist größer als im Maximum der μ-Schlupf-Kurve), ist im Steuergerät 6 ein Algorithmus hinterlegt, der im Wesentlichen wie in Fig. 2 dargestellt arbeitet:

In einem ersten Schritt 10 erzeugt das Motor-Steuergerät 6 ein Steuersignal für den Motor 5, mittels dessen das Motor- bzw. Antriebsmoment $M_A$ automatisch erhöht oder verringert wird. In Block 12 wird das Signal des Drehzahlsensors 7 vom Motor-Steuergerät 6 abgetastet und ausgewertet.

Im vorliegen Ausführungsbeispiel wird auf Vorliegen von hohem Radschlupf erkannt, wenn die Änderung der Radgeschwindigkeit infolge der Änderung des Antriebsmoments einen vorgegebenen Schwellenwert überschreitet. Bei einem instabilen Rad wird sich die Radgeschwindigkeit relativ schnell ändern, da durch das Antriebsmoment im Wesentlichen nur das betreffende Rad beschleunigt bzw. verzögert wird. Liegt dagegen kein bzw geringer Radschlupf vor (d. h. der Radschlupf ist kleiner als im Maximum der μ-Schlupf-Kurve), ist die resultierende Radbeschleunigung bzw. -Verzögerung wesentlich geringer, da nicht nur das betreffende Rad, sondern das gesamte Fahrzeug beschleunigt bzw. verzögert werden muss. Aus der Reaktion des Rades kann somit geschlossen werden, ob es instabil ist oder nicht. Anstelle der Radgeschwindigkeit könnte alternativ auch die Raddrehzahl, die Radbeschleunigung oder eine andere, das Radverhalten kennzeichnende Größe für den Schwellenwertvergleich herangezogen werden.

Der Schwellenwert hat vorzugsweise etwa 10% Abweichung gegenüber dem Wert, der ohne die künstliche Änderung des Antriebsmoments, bei nicht (oder gering) schlupfendem Rad vorliegen würde.

Gemäß einer speziellen Ausführungsform der Erfindung kann das Verfahren der Schritte 10 und 12 verfeinert werden, indem das Antriebsmoment mehrere Male aufeinander folgend erhöht und verringert wird. Im Extremfall kann das Rad 2a oszillierend angeregt werden. Sofern das Rad 2a instabil ist, wird es der Oszillation des Motormoments zeitnah, mit hoher Amplitude folgen. Wenn das Rad dagegen ohne bzw. mit geringem Schlupf läuft, wird es nur mit sehr geringer Amplitude folgen, da in diesem Fall die Trägheit des gesamten Fahrzeugs gegen die Anregung wirkt. Das Vorliegen einer Radinstabilität wird hier erkannt, wenn die Änderung der Radgeschwindigkeit oder die Schwingungsfrequenz des Rades wenigstens ein mal einen vorgegebenen Schwellenwert übersteigt.

In Schritt 14 wird schließlich das Ergebnis der Schlupfermittlung an andere Steuergeräte weitergeleitet, damit andere Steuerungs- oder Regelungsalgorithmen, die die Fahrzeuggeschwindigkeit verarbeiten, entsprechend reagieren können.

**Patentansprüche**

1. Verfahren zum Detektieren von Radschlupf an wenigstens einem Rad (2a,2b), das von einem Motor (5) angetrieben wird, wobei das am Rad (2a,2b) wirkende Antriebsmoment ($M_A$) automatisch variiert, und die Reaktion des Rades auf die Änderung des Antriebsmoments ($M_A$) gemessen und ausgewertet wird, **dadurch gekennzeichnet, dass** der Radschlupf aus dem Verhältnis zwischen der Änderung des Antriebsmoments ($M_A$) und der dadurch bewirkten Änderung der Radbeschleunigung quantitativ bestimmt wird.

2. Verfahren nach Anspruch 1, **dadurch gekennzeichnet, dass** das Antriebsmoment ($M_A$) erhöht oder reduziert wird.

3. Verfahren nach Anspruch 1 oder 2, **dadurch gekennzeichnet, dass** auf Vorliegen von hohem Radschlupf erkannt wird, wenn eine die Reaktion des Rades kennzeichnende Größe, infolge der Änderung des Antriebsmoments ($M_A$) einen vorgegebenen Schwellenwert übersteigt.

**4.** Verfahren nach Anspruch 3, **dadurch gekennzeichnet, dass** der Schwellenwert bei etwa 10% Abweichung gegenüber dem Wert liegt, der ohne die Änderung des Antriebsmoments ($M_A$) vorliegen würde.

**5.** Verfahren nach Anspruch 3, **dadurch gekennzeichnet, dass** die Radbeschleunigung aus einer Raddrehzahl ermittelt wird, die mittels eines Rad-Drehzahlsensors (7) gemessen wird.

**6.** Verfahren nach einem der vorhergehenden Ansprüche, **dadurch gekennzeichnet, dass** das am Rad (2a,2b) wirkende Antriebsmoment ($M_A$) ein oder mehrere Male aufeinander folgend erhöht und wieder reduziert wird.

**7.** Verfahren nach Anspruch 3 und 6 **dadurch gekennzeichnet, dass** auf Vorliegen von hohem Radschlupf erkannt wird, wenn die charakteristische Größe wenigstens einmal einen vorgegebenen Schwellenwert übersteigt.

**8.** Verfahren nach einem der vorhergehenden Ansprüche, **dadurch gekennzeichnet, dass** die Variation des Antriebsmoments ($M_A$) mittels eines Motorsteuergeräts (6) initiiert wird, das ein entsprechendes Motorsteuersignal an den Motor (5) des Fahrzeugs ausgibt.

**9.** Steuergerät, umfassend Mittel zum Durchführen eines der vorstehend genannten Verfahren.

**Claims**

**1.** Method for detecting a wheel slip at at least one wheel (2a, 2b) which is driven by an engine (5), wherein the drive torque ($M_A$) acting on the wheel (2a, 2b) is varied automatically, and the reaction of the wheel to the change in the drive torque ($M_A$) is measured and evaluated, **characterized in that** the wheel slip is determined quantitatively from the ratio between the change in the drive torque ($M_A$) and the change which is brought about thereby in the wheel acceleration.

**2.** Method according to Claim 1, **characterized in that** the drive torque ($M_A$) is increased or reduced.

**3.** Method according to Claim 1 or 2, **characterized in that** the presence of high wheel slip is detected if a variable characterizing the reaction of the wheel exceeds a predefined threshold value owing to the change in the drive torque ($M_A$).

**4.** Method according to Claim 3, **characterized in that** the threshold value is at an approximately 10% deviation with respect to the value which would be present without the change in drive torque ($M_A$).

**5.** Method according to Claim 3, **characterized in that** the wheel acceleration is determined from a wheel speed which is measured by means of a wheel speed sensor (7).

**6.** Method according to one of the preceding claims, **characterized in that** the drive torque ($M_A$) which acts on the wheel (2a, 2b) is increased one or more times in succession and reduced again.

**7.** Method according to Claims 3 and 6, **characterized in that** the presence of high wheel slip is detected if the characteristic variable exceeds a predefined threshold value at least once.

**8.** Method according to one of the preceding claims, **characterized in that** the variation of the drive torque ($M_A$) is initiated by means of an engine control unit (6) which outputs a corresponding engine control signal to the engine (5) of the vehicle.

**9.** Control unit, comprising means for carrying out one of the methods specified above.

**Revendications**

**1.** Procédé pour détecter un glissement de roue au niveau d'au moins une roue (2a, 2b) qui est entraînée par un - moteur (5), le couple d'entraînement ($M_A$) agissant sur la roue (2a, 2b) variant automatiquement, et la réaction de la roue à la variation du couple d'entraînement ($M_A$) étant mesurée et analysée, **caractérisé en ce que** le glissement de roue est déterminé quantitativement à partir du rapport entre la variation du couple d'entraînement ($M_A$) et la variation provoquée par celle-ci de l'accélération de la roue.

**2.** Procédé selon la revendication 1, **caractérisé en ce que** le couple d'entraînement ($M_A$) est augmenté ou réduit.

**3.** Procédé selon la revendication 1 ou 2, **caractérisé en ce qu'**en présence d'un glissement de roue important, on détecte si une grandeur caractérisant la réaction de la roue dépasse, du fait de la variation du couple d'entraînement ($M_A$), une valeur seuil prédéfinie.

**4.** Procédé selon la revendication 3, **caractérisé en ce que** la valeur seuil est située à un écart d'environ 10 % par rapport à la valeur qui s'obtiendrait sans la variation du couple d'entraînement ($M_A$).

**5.** Procédé selon la revendication 3, **caractérisé en ce que** l'accélération de la roue est déterminée à partir d'une vitesse de rotation de la roue qui est mesurée au moyen d'un capteur de vitesse de rotation de roue (7).

**6.** Procédé selon l'une quelconque des revendications précédentes, **caractérisé en ce que** le couple d'entraînement ($M_A$) agissant sur la roue (2a, 2b) est augmenté et à nouveau réduit une ou plusieurs fois de suite.

**7.** Procédé selon les revendications 3 et 6, **caractérisé en ce qu'**en présence d'un glissement de roue important, on détecte si la grandeur caractéristique dépasse au moins une fois une valeur seuil prédéfinie.

**8.** Procédé selon l'une quelconque des revendications précédentes, **caractérisé en ce que** la variation du couple d'entraînement ($M_A$) est amorcée au moyen d'un appareil de commande de moteur (6) qui envoie un signal de commande de moteur correspondant au moteur (5) du véhicule.

**9.** Appareil de commande, comprenant des moyens pour mettre en oeuvre l'un des procédés susmentionnés.

Fig. 1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6615126 B1